# EUROPÄISCHE PATENTSCHRIFT

(11) **EP 2 326 799 B1**
(45) Veröffentlichungstag und Bekanntmachung des Hinweises auf die Patenterteilung: **20.08.2014**
(21) Anmeldenummer: 09737336.9
(22) Anmeldetag: 09.09.2009
(51) Int. Cl.: F01D 21/00

(54) **VORRICHTUNG UND VERFAHREN ZUR LEBENSDAUERÜBERWACHUNG**
APPARATUS AND METHOD FOR SERVICE LIFE MONITORING
DISPOSITIF ET PROCÉDÉ POUR LE CONTRÔLE DE LA DURÉE DE VIE

(30) Priorität: 26.09.2008 DE 102008049170
(43) Veröffentlichungstag der Anmeldung: 01.06.2011
(73) Patentinhaber: MTU Aero Engines AG, 80995 München (DE)
(72) Erfinder: KNODEL, Eberhard, 85305 Jetzendorf-Priel (DE); BORUFKA, Hans-Peter, 82319 Starnberg (DE); ARRIETA, Hernan, Victor, 35-302 Rzeszow (PL)
(86) Internationale Anmeldenummer: PCT/DE2009/001282
(87) Internationale Veröffentlichungsnummer: WO 2010/034286

(56) Entgegenhaltungen:
- EP-A- 1 835 149
- US-A1- 2004 148 129

## Beschreibung

Die Erfindung befasst sich mit einer Vorrichtung und einem Verfahren zur Lebensdauerüberwachung von Triebwerken oder Turbinen, die eine Verdichter- und/oder Turbinen-Blisk enthalten.

Flugtriebwerke und stationäre Turbinen müssen in regelmäßigen Abständen gewartet und auf Betriebsschäden untersucht werden. Diese regelmäßige Überwachung kann durch eine Lebensdauerüberwachung im laufenden Betrieb unterstützt werden, um den Beanspruchungsumfang und den Schädigungszustand des Triebwerks oder der Turbine im Voraus abzuschätzen und eine zustandsabhängige Wartung zu ermöglichen.

Bei Flugtriebwerken ist eine solche bordseitige Lebensdauerüberwachung im laufenden Betrieb seit längerem bekannt und wurde von der Anmelderin für die Strahltriebwerke RB199 des Tornado und EJ200 des Eurofighters und das Wellenleistungstriebwerk MTR390 des Hubschraubers Tiger entwickelt. Bei dieser Lebensdauerüberwachung kommen verschiedene Algorithmen zum Einsatz, um auf Grundlage von Betriebsparametern, die im laufenden Betrieb des Triebwerks gemessen werden, die momentanen Beanspruchungen kritischer Triebwerksbauteile zu berechnen. Anschließend wird der akkumulierte Schaden des Triebwerkbauteils, der durch die momentanen Beanspruchungen hervorgerufen wird, abgeschätzt und wird die bisher verbrauchte Lebensdauer ermittelt.

In modernen Triebwerken finden Verdichter- und Turbinen-Blisks Verwendung. Das Wort Blisk ist eine englischsprachige Kurzform für "Blade Integrated Disk", die sich aus den Wörtern Blade (Schaufel) und Disk (Scheibe) zusammensetzt. Wie das Wort andeutet, bilden Schaufel und Scheibe bei einer Blisk eine Einheit. Dadurch entfallen Montagekosten und wird eine Gewichtsersparnis erreicht.

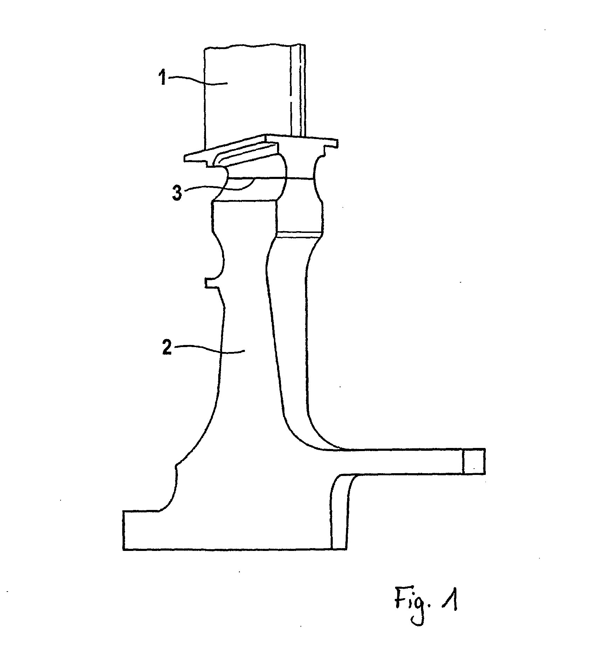

Blisks können hergestellt werden, indem durch spanende Bearbeitung das Schaufelprofil aus der Außenkontur einer geschmiedeten Scheibe oder eines Scheibensegments ausgearbeitet wird oder indem eine Schaufel durch z.B. Reibschweißen fest mit einer Scheibe oder einem Scheibensegment verbunden wird. Die beiliegende Zeichnung zeigt eine Turbinen-Blisk für eine Hochdruck-Turbine, bei der eine Schaufel 1 über eine Schweißverbindung 3 mit einem Scheibensegment 2 verbunden ist.

Abhängig vom Triebwerkstyp und der Lage der Blisk kann die Blisk auch mit einem Abstützsteg, der englischsprachig auch als "Shroud" bezeichnet wird, ausgebildet sein. Ein Beispiel für eine mit Shrouds versehene Verdichter-Blisk ist in der US 5,562,419 gezeigt.

Die EP 1 835 149 A1 offenbart eine Vorrichtung und ein Verfahren zum Überwachen des Betriebs einer Turbine. Zu diesem Zweck wird mittels Temperatursensoren ein Bauteil an verschiedenen Stellen hinsichtlich seiner Spannungssituation überwacht. Die gemessenen Temperaturen werden über eine Finite-Methode zu einer Kenngröße zur Beschreibung der Spannungssituation weiterverarbeitet.

Die US 2004/0148129 A1 befasst sich mit der Diagnose eines Schadenszustands einer stationären Kraftwerksturbine. Die Diagnosegenauigkeit wird verbessert, indem sowohl Betriebsinformationen als auch Prozessinformationen während des Betrieb der Turbine verarbeitet werden. Unter Betriebinformation ist insbesondere die Betriebsdauer zu verstehen.

Aufgabe der Erfindung ist es, bei laufendem Betrieb die Lebensdauerüberwachung von Triebwerken oder Turbinen zu verbessern, die eine Verdichter- und/oder Turbinen-Blisk enthalten.

Gemäß einer ersten Ausgestaltung der Erfindung wird die Aufgabe durch eine Vorrichtung zur Überwachung der Lebensdauer eines Triebwerks oder einer Turbine mit Verdichter- und/oder Turbinen-Blisk gelöst, wie sie in Anspruch 1 definiert ist. Diese Vorrichtung hat eine Einleseeinrichtung zum Einlesen von Betriebsparametern, die bei laufendem Betrieb des Triebwerks oder der Turbine gemessen werden; eine Beanspruchungsberechnungseinrichtung zum Berechnen von momentanen Beanspruchungen von Unterstrukturen der Blisk auf Grundlage der gemessenen Betriebsparameter; und eine Schadensabschätzeinrichtung zum Abschätzen der durch die momentanen Beanspruchungen hervorgerufenen akkumulierten Schäden der einzelnen Unterstrukturen der Blisk, wobei zu den Unterstrukturen der Blisk, für die die Beanspruchungsberechnungseinrichtung die momentanen Beanspruchungen berechnet, mindestens zwei der Unterstrukturen Schaufel (1), Scheibe (2) und, sofern vorhanden, Verbindungsbereich (3) zwischen Schaufel (1) und Scheibe (2) und Shroud gehören.

Gemäß einer zweiten Ausgestaltung der Erfindung ist ein Verfahren zur Lebensdauerüberwachung eines Triebwerks oder einer Turbine mit Blisk vorgesehen, wie es in Anspruch 5 definiert ist. Dieses Verfahren enthält die Schritte Messen von Betriebsparametem bei laufendem Betrieb des Triebwerks oder der Turbine; Berechnen von momentanen Beanspruchungen von Unterstrukturen der Blisk auf Grundlage der gemessenen Betriebsparameter; und Abschätzen der durch die momentanen Beanspruchungen hervorgerufenen akkumulierten Schäden der einzelnen Unterstrukturen der Blisk, wobei im Schritt Berechnen der momentanen Beanspruchungen die momentanen Beanspruchungen von mindestens zwei der Unterstrukturen Schaufel (1), Scheibe (2) und, sofern vorhanden, Verbindungsbereich (3) zwischen Schaufel (1) und Scheibe (3) und Shroud berechnet werden.

Die erfindungsgemäße Vorrichtung und das erfindungsgemäße Verfahren zeichnen sich dadurch aus, dass die momentanen Beanspruchungen von nicht nur einem einzigen kritischen Teil der Blisk, sondern von mindestens zwei Unterstrukturen der Blisk berechnet werden. Außerdem wird nicht der akkumulierte Schaden der Blisk als einzelner Gesamtwert abgeschätzt, sondern werden die akkumulierten Schäden der einzelnen Unterstrukturen abgeschätzt. Dadurch lässt sich das Lebensdauerpotenzial der einzelnen Unterstrukturen abschätzen, was eine wesentlich genauere Abschätzung des Gesamtlebensdauerverbrauchs der Blisk erlaubt.

Bei der Erfindung gehören zu den Unterstrukturen, für die die momentanen Beanspruchungen berechnet werden, mindestens zwei der Unterstrukturen Schaufel, Scheibe und, sofern vorhanden, Verbindungsbereich zwischen Schaufel und Scheibe und Shroud. Diese Unterstrukturen sind im laufenden Betrieb höchst unterschiedlichen Beanspruchungen ausgesetzt, weswegen es sinnvoll ist, zwischen den einzelnen Beanspruchungen dieser Unterstrukturen und den einzelnen, damit einhergehenden akkumulierten Schäden in diesen Unterstrukturen zu unterscheiden.

Bei der Erfindung gehören zu den momentanen Beanspruchungen, die berechnet werden, vorzugsweise mindestens zwei der Beanspruchungen thermo-mechanische Ermüdung, Kriechen, Ermüdung bei niedriger Lastspielzahl (englischsprachig auch "Low-Cycle-Fatigue" genannt), Ermüdung bei hoher Lastspielzahl (englischsprachig auch "High-Cycle-Fatigue" genannt) sowie Heißgaskorrosion. Bei diesen Beanspruchungen handelt es sich um die häufigsten Versagensmechanismen, die die Lebensdauer der Blisk begrenzen, weswegen es ratsam ist, dass sie bei der Berechnung der Beanspruchungen und beim anschließenden Abschätzen der akkumulierten Schäden Berücksichtigung finden.

Schließlich wird bei der Schadensabschätzung vorzugsweise mit Schadenstoleranzen gearbeitet. Bei diesem an sich bekannten Konzept werden Betriebsschäden einkalkuliert, aus denen Risse oder andere Defekte entstehen können, die für einen definierten Zeitraum (bis z.B. zum nächsten Wartungspflichttermin) unentdeckt bleiben können. Mit anderen Worten wird ein Zeit-Puffer eingerechnet, damit die Blisk niemals in den gefährlichen Bereich kommen kann.

Die Erfindung ermöglicht dadurch, dass die im laufenden Betrieb gemessenen Betriebsparameter verwendet werden, um die akkumulierten Schäden in den einzelnen Unterstrukturen der Blisk abzuschätzen, eine individuelle und risikominimierte Nutzung des Lebensdauerpotenzials der Blisk. Dadurch lassen sich Wartungsarbeiten besser planen und Betriebskosten senken. Die erfindungsgemäße Vorrichtung und das erfmdungsgemäßen Verfahrens eignen sich daher insbesondere zur Entwicklung einer optimierten Wartungsstrategie, die sowohl eine Reparatur als auch einen Austausch der geschädigten Blisk beinhalten kann.

Es folgt nun eine Beschreibung weiterer Einzelheiten und Merkmale der Erfindung, die das Erfindungsprinzip veranschaulichen sollen.

Bei Flugtriebwerken hat sich herausgestellt, dass der Lebensdauerverbrauch und Schädigungsfortschritt nur in grober Näherung von der Gesamtflugzeit abhängt. So haben insbesondere Start und Stopp des Triebwerks und einzelne Flugmanöver, die während des Flugs zu Leistungsspitzen führen, erheblichen Einfluss auf die Lebensdauer der einzelnen Triebwerkbauteile. Eine Änderung der Steuerungs-Software oder Modifikationen an der Hardware des Triebwerks können ebenfalls Einfluss auf die Lebensdauer ausüben. Deswegen ist es sinnvoll, den Lebensdauerverbrauch der kritischen Bauteile eines Triebwerks, etwa von Verdichter- und Turbinen-Blisks, während des laufenden Betriebs zu überwachen.

Zu den Betriebsparametern des Triebwerks, die im laufenden Betrieb gemessen werden können, gehören insbesondere die Einlassbedingungen, die Drehzahlen sowie die Temperaturen und Drücke im Gaskanal und den Kühlluftkanälen.

Zu den die Triebwerkbauteile belastenden Faktoren gehören in erster Linie thermische Belastungen aufgrund der Temperaturverteilung im Bauteil und mechanische Belastungen aufgrund der auf das Bauteil wirkenden Zug- und Druckkräfte, aber auch chemische Belastungen wie z.B. durch Heißgaskorrosion.

Bei der Berechnung der thermischen Belastung wird die Temperaturverteilung im Bauteil berechnet. Ausgehend von der anfänglichen Temperaturverteilung, die von der letzten Temperaturverteilung beim vorherigen Betriebseinsatz, der momentanen Umgebungstemperatur und der seit dem letzten Betriebseinsatz vergangenen Zeit abhängt, wird auf Grundlage der gemessenen Betriebsparameter die Entwicklung der Temperaturverteilung über den gesamten Betriebseinsatz berechnet.

Bei der Berechnung der mechanischen Belastungen wird für jeden überwachten Bereich die wirkende Gesamtlast berechnet. Die Gesamtlast setzt sich aus den Wärmespannungen, die sich aus der momentanen Temperaturverteilung ergeben, den Zentrifugalspannungen, die sich aus der Drehzahl ergeben, und Zusatzspannungen in Folge des Gasdrucks, der Montagekräfte usw. zusammen.

Zu den lebensdauerkritischen Unterstrukturen einer Verdichter- oder Turbinen-Blisk gehören die Schaufeln und die Scheibe oder Scheibensegmente. Außerdem kann der Verbindungsbereich zwischen den Schaufeln und der Scheibe kritisch sein, insbesondere bei reibgeschweißten Blisks, bei denen Schaufel und Scheibe aus unterschiedlichen Materialien bestehen. Bei Blisks mit Shroud können auch Schäden im Shroud die Lebensdauer begrenzen.

Die Belastungen, die auf die einzelnen Unterstrukturen der Blisk wirken, werden anhand von speziellen Algorithmen berechnet, die schnell genug sind, um eine bordseitige Echtzeit-Berechnung zuzulassen. Die Berechnung der auf die Schaufel wirkenden Belastungen erfolgt vorzugsweise durch fünf Algorithmen, die jeweils die thermo-mechanische Ermüdung, das Kriechen, die Ermüdung bei niedriger Lastspielzeit, die Ermüdung bei hoher Lastspielzeit und die Heißgaskorrosion berechnen. Die Berechnung der Belastungen, die auf die Scheibe und den Shroud wirken, erfolgt vorzugsweise durch jeweils zwei Algorithmen, die das Kriechen und die Ermüdung bei niedriger Lastspielzeit berechnen. Die Berechnung der Belastungen, die auf den Verbindungsbereich zwischen Schaufel und Scheibe wirken, erfolgt vorzugsweise durch zwei Algorithmen, die die thermo-mechanische Ermüdung und die Ermüdung bei niedriger Lastspielzeit berechnen.

Die Belastungen, die für die einzelnen Unterstrukturen der Blisk berechnet werden, werden anschließend mit Hilfe geeigneter Algorithmen hinsichtlich des relevanten Schädigungsmechanismus beurteilt, um auf Grundlage dessen die Schäden abzuschätzen, die in den Unterstrukturen während des laufenden Betriebs hinzukommen. Diese Schäden werden jeweils mit den bereits vorhandenen Schäden akkumuliert, so dass sich für jede Unterstruktur bezogen auf die Gesamtlebensdauer der Unterstruktur ein Zuwachs an Lebensdauerverbrauch berechnen lässt.

Aus der Differenz zwischen dem Lebensdauerpotenzial und dem Lebensdauerverbrauch der einzelnen Unterstrukturen kann die Restlebensdauer der jeweiligen Unterstiuktur abgeschätzt werden. Dabei wird vorzugsweise mit Schadenstoleranzen gearbeitet, um einen Zeit-Puffer einzurechnen, damit die akkumulierten Schäden der Unterstrukturen niemals vor der nächsten Wartung in den gefährlichen Bereich kommen können. Die Restlebensdauer der gesamten Blisk wird dann durch die Restlebensdauer der Unterstruktur mit dem höchsten Lebensdauerverbrauch bestimmt.

Abhängig von den auf diese Weise berechneten Restlebensdauern kann dann eine geeignete zustandsabhängige Wartungsstrategie entwickelt werden. Wenn die Lebensdauerüberwachung der Blisk zum Beispiel ergeben sollte, dass die Schädigung der Schaufeln schon weit fortgeschritten ist, während der Lebensdauerverbrauch der Scheibe noch nicht erheblich ist, könnte eine mögliche Wartungsstrategie sein, die Schaufeln mit Ablauf ihrer Restlebensdauer auszutauschen, die Scheiben aber nach einer Reparatur oder Überholung weiterzubenutzen. Wenn sich dagegen herausstellen sollte, dass der Lebensdauerverbrauch bei beiden Unterstrukturen ungefähr gleich weit fortgeschritten ist, könnte ein Austausch der kompletten Blisk die wirtschaftlichere Alternative sein. Im ersten Fall würde nach der Wartung nur der akkumulierte Schaden der Schaufeln auf Null zurückgesetzt werden, während die übrigen Unterstrukturen ihre akkumulierten Schäden behielten, wohingegen im zweiten Fall die akkumulierten Schäden aller Unterstrukturen auf Null zurückgesetzt würden.

Im Ergebnis ermöglicht die erfindungsgemäße Lebensdauerüberwachung also eine bedarfsgerechtere und kostengünstigere Wartung der Blisk. Darüber hinaus können die durch die Lebensdauerwachung gewonnenen Daten auch für andere Zwecke genutzt werden, etwa für die Weiterentwicklung des Triebwerks oder für eine Anpassung der Triebwerk-Hardware und Triebwerk-Software an das individuelle Einsatzmuster des Triebwerks.

Es versteht sich, dass die erfindungsgemäße Lebensdauerüberwachung nicht nur bei Flugtriebwerken, sondern auch bei stationären Turbinen wie zum Beispiel Gasturbinen von Nutzen ist, die nicht kontinuierlich mit konstanter Betriebsleistung gefahren werden. Unter den Schutzumfang der Patentansprüche können also auch andere Nutzungsmöglichkeiten und Ausführungsbeispiele fallen, die nicht explizit angesprochen wurden.

## Patentansprüche

1. Vorrichtung zur Überwachung der Lebensdauer eines Triebwerks oder einer Turbine mit Verdichter- oder Turbinen-Blisk, mit:
einer Einleseeinrichtung zum Einlesen von Betriebsparametern, die bei laufendem Betrieb des Triebwerks oder der Turbine gemessen werden; **gekennzeichnet durch** eine Beanspruchungsberechnungseinrichtung zum Berechnen von momentanen Beanspruchungen von Unterstrukturen der Blisk auf Grundlage der gemessenen Betriebsparameter; und
eine Schadensabschätzeinrichtung zum Abschätzen der **durch** die momentanen Beanspruchungen hervorgerufenen akkumulierten Schäden der einzelnen Unterstrukturen der Blisk,
wobei zu den Unterstrukturen der Blisk, für die die Beanspruchungsberechnungseinrichtung die momentanen Beanspruchungen berechnet, mindestens zwei der Unterstrukturen Schaufel (1), Scheibe (2) und, sofern vorhanden, Verbindungsbereich (3) zwischen Schaufel (1) und Scheibe (2) und Shroud gehören.

2. Vorrichtung nach Anspruch 1, wobei zu den momentanen Beanspruchungen, die von der Beanspruchungsberechnungseinrichtung berechnet werden, mindestens zwei der Beanspruchungen thermo-mechanische Ermüdung, Kriechen, Ermüdung bei niedriger Lastspielzeit, Ermüdung bei hoher Lastspielzeit sowie Heißgaskorrosion gehören.

3. Vorrichtung nach einem der Ansprüche 1 bis 2, wobei die Schadensabschätzeinrichtung mit Schadenstoleranzen arbeitet.

4. Verfahren zur Lebensdauerüberwachung eines Triebwerks oder einer Turbine mit Verdichter- oder Turbinen-Blisk, mit den Schritten:
Messen von Betriebsparametern bei laufendem Betrieb des Triebwerks oder der Turbine; **gekennzeichnet durch**
Berechnen von momentanen Beanspruchungen von Unterstrukturen der Blisk auf Grundlage der gemessenen Betriebsparameter; und
Abschätzen der **durch** die momentanen Beanspruchungen hervorgerufenen akkumulierten Schäden der einzelnen Unterstrukturen der Blisk,
wobei im Schritt Berechnen der momentanen Beanspruchungen die momentanen Beanspruchungen von mindestens zwei der Unterstrukturen Schaufel (1), Scheibe (2) und, sofern vorhanden, Verbindungsbereich (3) zwischen Schaufel (1) und Scheibe (3) und Shroud berechnet werden.

5. Verfahren nach Anspruch 4, wobei im Schritt Berechnen der momentanen Beanspruchungen mindestens zwei der Beanspruchungen thermo-mechanische Ermüdung, Kriechen, Ermüdung bei niedriger Lastspielzeit, Ermüdung bei hoher Lastspielzeit sowie Heißgaskorrosion berechnet werden.

6. Verfahren nach einem der Ansprüche 4 bis 5, wobei im Schritt Abschätzen des akkumulierten Schadens mit Schadenstoleranzen gearbeitet wird.

7. Verwendung der Vorrichtung gemäß einem der Ansprüche 1 bis 3 oder des Verfahrens gemäß einem der Ansprüche 4 bis 6 zur Entwicklung einer Wartungsstrategie.

## Claims

1. Device for the monitoring of the service life of a power unit or a turbine having a compressor or turbine blisk, having:
a reading device for reading operating parameters measured during the ongoing operation of the power unit or turbine, **characterised by** a stress calculation device for calculating instantaneous stresses of substructures of the blisk on the basis of the measured operating parameters,
and
a damage estimation device for estimating the accumulated damages to the substructures of the blisk caused by the instantaneous stresses, wherein at least two of the following substructures: blade (1), disc (2) and where applicable, connecting area (3) between blade (1) and disc (2) and shroud belong to the substructures of the blisk, for which the stress calculation device calculates the instantaneous stresses.

2. Device according to claim 1, wherein at least two of the following stresses: thermo-mechanical fatigue, creep, fatigue during low cycle times, fatigue during high cycle times and hot gas corrosion belong to the instantaneous stresses calculated by the stress calculation device.

3. Device according to one of claims 1 to 2, wherein the damage estimation device functions with damage tolerances.

4. Method to monitor the service life of a power unit or turbine having a compressor or turbine blisk, with the steps:
measuring of operating parameters during the ongoing operation of the power unit or turbine; **characterised by** calculation of instantaneous stresses of substructures of the blisk on the basis of the measured operating parameters; and
estimation of the accumulated damages to the individual substructures of the blisk caused by the instantaneous stresses, wherein in the step of calculating the instantaneous stresses, the instantaneous stresses of at least two of the substructures blade (1), disc (2) and, where applicable the connecting area (3) between the blade (1) and disc (2) and shroud are calculated.

5. Method according to claim 4, wherein during the step of calculating the instantaneous stresses, at least two of the following stresses are calculated: thermo-mechanical fatigue, creep, fatigue during low cycle time, fatigue during high cycle time and hot gas corrosion.

6. Method according to one of claims 4 to 5, wherein during the step of estimating the accumulated damage, there is operation with damage tolerances.

7. Use of the device according to one of claims 1 to 3 or the method according to one of claims 4 to 6 for the development of a maintenance strategy.

## Revendications

1. Dispositif de surveillance de durée de vie d'un propulseur ou d'une turbine avec un disque aubagé monobloc de compresseur ou de turbine, comprenant :
un dispositif de lecture pour la lecture de paramètres de fonctionnement qui sont mesurés en fonctionnement du propulseur ou de la turbine ;
**caractérisé par** un dispositif de calcul de sollicitations pour le calcul de sollicitations momentanées de sous-structures du disque aubagé monobloc sur la base des paramètres de fonctionnement mesurés : et
un dispositif d'estimation de dommages pour l'estimation des dommages accumulés suscités par les sollicitations momentanées des sous-structures individuelles du disque aubagé monobloc,
au moins deux des sous-structures parmi la pale (1), le disque (2) et, le cas échéant, la zone de liaison (3) entre la pale (1) et le disque (2) et l'anneau de renforcement appartenant aux sous-structures du disque aubagé monobloc, pour lesquelles le dispositif de calcul de sollicitations calcule les sollicitations momentanées.

2. Dispositif selon la revendication 1, au moins deux des sollicitations parmi la fatigue thermomécanique, le fluage, la fatigue en cas de faible cycle de charge, la fatigue en cas de cycle de charge élevé ainsi que la corrosion des gaz chauds appartenant aux sollicitations momentanées qui sont calculées par le dispositif de calcul de sollicitations.

3. Dispositif selon l'une quelconque des revendications 1 à 2, le dispositif d'estimation de dommages travaillant avec des tolérances de dommages.

4. Procédé de surveillance de durée de vie d'un propulseur ou d'une turbine avec un disque aubagé monobloc de compresseur ou de turbine, comprenant les étapes suivantes :
la mesure des paramètres de fonctionnement en fonctionnement du propulseur ou de la turbine,
**caractérisé par**
le calcul de sollicitations momentanées de sous-structures du disque aubagé monobloc sur la base des paramètres de fonctionnement mesurés ; et
l'estimation des dommages accumulés suscités par les sollicitations momentanées des sous-structures individuelles du disque aubagé monobloc,
les sollicitations momentanées d'au moins deux des sous-structures parmi la pale (1), le disque (2) et, le cas échéant, la zone de liaison (3) entre la pale (1) et le disque (3) et l'anneau de renforcement étant calculées à l'étape de calcul des sollicitations momentanées.

5. Procédé selon la revendication 4, au moins deux des sollicitations parmi la fatigue thermomécanique, le fluage, la fatigue en cas de faible cycle de charge, la fatigue en cas de cycle de charge élevé ainsi que la corrosion aux gaz chauds étant calculées à l'étape de calcul des sollicitations momentanées.

6. Procédé selon l'une quelconque des revendications 4 à 5, étant mis en oeuvre avec des tolérances de dommages à l'étape d'estimation du dommage accumulé.

7. Utilisation du dispositif selon l'une quelconque des revendications 1 à 3 ou du procédé selon l'une quelconque des revendications 4 à 6 pour le développement d'une stratégie d'entretien.
